# EUROPEAN PATENT APPLICATION

(11) **EP 1 469 206 A1**
(43) Date of publication of application: **20.10.2004**
(21) Application number: 04075253.7
(22) Date of filing: 27.01.2004
(51) Int. Cl.: F16B 12/20

(54) **Device for joining together two parts with respect to each other**

(30) Priority: 17.04.2003 IT MI20030799
(71) Applicant: F.lli Mauri S.r.l., 23852 Garlate (Lecco) (IT)
(72) Inventor: Mauri, Gaetano, Lecco (IT)
(74) Representative: Raimondi, Margherita

(57) **Abstract**

Device for joining together, in a longitudinal direction (X-X), two parts (1,2;1001,1002) with respect to each other, comprising a head (100) integral with one (1,2) of the two parts to be joined, a pin (300;1300) integral with the other (2,1) of the said parts to be joined, said head having, arranged inside it, a gearing (210,220) able to be actuated in a direction (Y-Y) perpendicular to the longitudinal joining direction and operate said pin (300;1300) so to determine joining together of the two parts (1,2;1001,1002) in the said longitudinal direction (X-X).

## Description

The present invention relates to a device for joining together in a longitudinal direction two parts with respect to each other.

It is known, in the furniture goods sector, that there exists the need to assemble furniture such as cabinets, chests of drawers and the like using flat components such as side pieces, cross pieces and the like which must be fastened together in a relative position at right angles in order to ensure that the piece of furniture is set squarely once assembled.

It is also known that, in order to obtain stable fastening between the various parts, screw/female thread means are widely used, said means essentially consisting of a cylindrical element which is to be concealingly inserted inside a corresponding seat of one of the two parts and which forms the element reacting against the head of a screw which passes through said cylindrical element and, being screwed onto the female thread of a bush integral with the other part of the furniture, causes pulling together of the two parts which come into contact with each other, remaining fastened together.

Although performing their function, these connecting device nevertheless have drawbacks essentially consisting in the fact that the head of the screw is never accessible from a direction perpendicular to that of the action of the thread/female thread connection, making operation of the screw by means of the corresponding tool particularly difficult.

In addition to this, the precision of the squared connection of the two parts is strictly dependent upon the precision of the design measurements of the various parts, including the receiving seats provided on the furniture, this obviously resulting in the precision and therefore the correct squared alignment of the said parts being very unpredictable.

The technical problem which is posed, therefore, is that of providing a device which is able to allow correct joining together, of two parts, for example the components of a piece of furniture or the like, which ensures easy accessibility for insertion of the tool and operation by the user, particularly but not specifically when the two parts are placed at an angle of 90°.

In addition to this it is required that the device should ensure that joining together is substantially independent of the precision with which the various parts to be joined are made, including the relative distances between the seats provided therein for housing the various parts forming the joining device.

Within the context of this problem it is required moreover that this device should have limited dimensions, should be easy to manufacture and assemble and should be compatible with the seats provided in the parts to be fastened together.

These results are obtained according to the present invention by a device for joining together, in a longitudinal direction, two parts with respect to each other, according to the characteristics of claim 1.

Further details may be obtained from the following description of a non-limiting example of embodiment of the subject of the present invention provided with reference to the accompanying drawings in which:

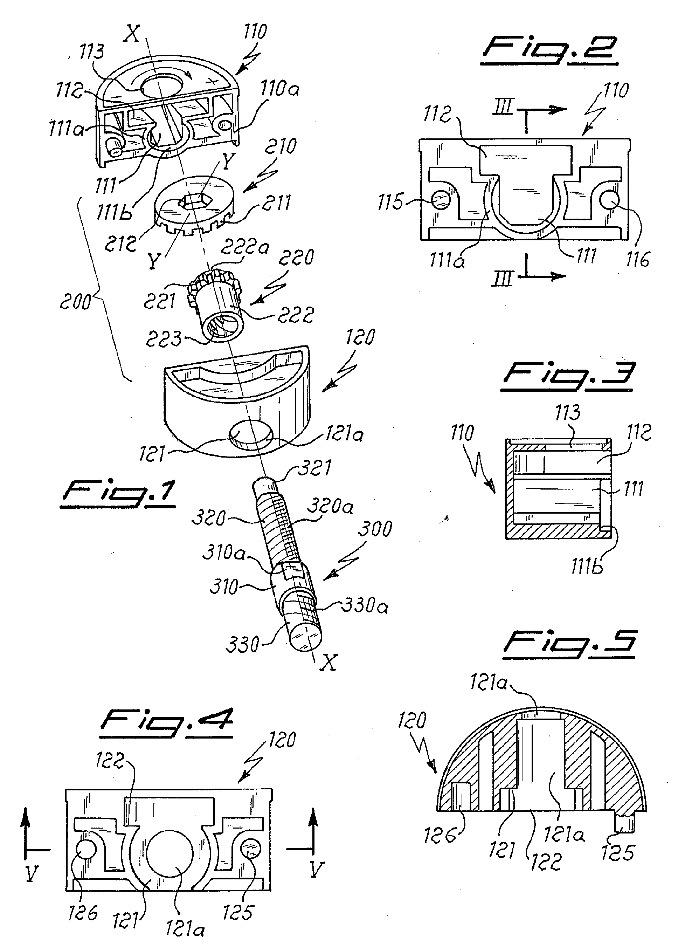

- Figure 1 shows an exploded view of the device according to the invention;
- Figure 2 shows a front facing view of one of the half-heads forming the device according to Figure 1;
- Figure 3 shows a schematic cross-section along a plane indicated by III-III in Fig. 2;
- Figure 4 shows a front facing view of the other half-head forming the device according to Figure 1;
- Figure 5 shows a schematic cross-section along a plane indicated by V-V in Fig. 4;
- Figure 6 shows a top plan view of the assembled device;
- Figure 7 shows a schematic perspective view of two walls of a cabinet placed at an angle of 90° and joined together by means of the device according to the present invention;
- Figure 8 shows a schematic cross-section along the plane indicated by VIII-VIII in Fig. 7;
- Figure 9 shows a further example of application of the device according to the present invention and
- Figure 10 shows a frontal view of two walls joined together along a longitudinal axis by means of a further example of application of the device according to the present invention.

As illustrated, the device according to the present invention is essentially composed of a cylindrical head 100 which, during use, is fixed to the first part 1 to be fastened to the other part 2 of the furniture, said head comprising two half-heads 110 and 120, respectively, each of which houses internally a corresponding part 210 and 220 of a gearing 200 able to be engaged with a pin 300, a part 330 of which is in turn able to be engaged with corresponding means 400 integral with the said part 2 to be brought up against the part 1 of the furniture.

For the sake of convenience of the description a longitudinal axis X-X of the device and a transverse axis Y-Y perpendicular to the former will be identified.

In greater detail the first half-head 110 has, inside it, a first coaxial seat 111 which is open towards the flat front side 110a of the half-head 110 and blind towards the opposite end coinciding with the curved side surface of the said half-head; the front edge 111a of the seat 111 has an undercut portion 111b, the function of which will emerge below.

A second seat 112 is formed inside the half-head 110, said seat being arranged along a horizontal plane (with an orientation not limited to that shown in the figures) and intersecting the said longitudinal seat 111 so that the two recesses are open and communicate with each other along the intersecting plane over the whole axial length of the said seats.

The said second seat 112 opens outwards by means of a hole 113 formed in the upper front surface of the half-head 110.

Said second recess 112 houses partially inside it a toothed wheel 210 which has teeth 211 extending from one side of the wheel 210 parallel to the axis of rotation Y-Y thereof and along the whole circumference of the wheel.

The side of the wheel opposite to that of the teeth is provided with a seat 212 shaped according to one or more cross-like/hexagonal profiles or the like of corresponding operating spanners (not shown).

Said wheel 210 forms the first part of a 90° gearing, the other part 220 of which is formed by a toothed rim 221 formed annularly on the external surface of a coaxial tube 222 which is also provided with a female thread 223.

The toothed rim 221 is axially arranged at a certain distance from the edge of the tube 222 so as to define an axial section 222a thereof able to be coaxially inserted in said first longitudinal seat 111 of the half-head 110.

The second half-head 120 has in turn a first seat 121 passing through the curved side surface of the half-head 120 via a longitudinal hole 121a open on both sides and able to house the tube 222.

The half-head 120 has, formed inside it, a second seat 122 arranged along a horizontal plane (with an orientation not limited to that shown in the figures) tangential to the said longitudinal seat 121; said second recess 122 extends towards the inside of the half-head 120 only over a short axial distance sufficient for containing the toothed wheel part 211 projecting from the seat 112 of the first half-head 110.

Both the half-heads 110,120 have an opposite flat surface provided with a respective pin 115,125 projecting axially outwards and a corresponding centring hole 116,126 suitable for engagement with the corresponding pin of the other half-head.

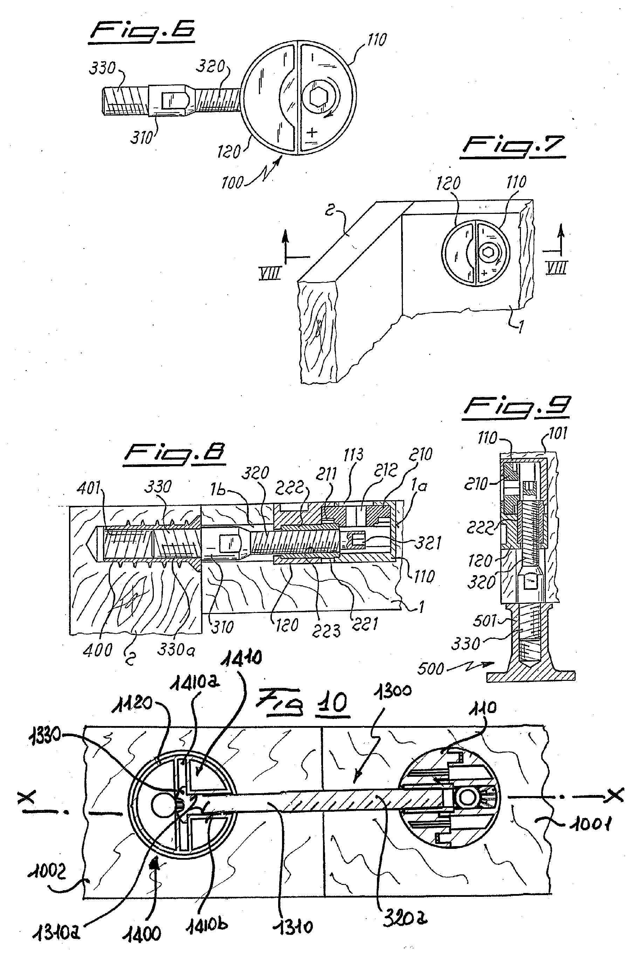

The device is completed by said pin 300 which comprises:
- a cylindrical central section 310 on the side surface of which smoothed zones 310a able to form elements for insertion of an operating spanner are provided;
- a first shank 320 extending longitudinally on one side of the said cylindrical section and provided with threading 320a able to engage with the female thread 223 of the tube 222; the free end part of said first shank is formed as an inset hexagonal part 320 suitable for engagement with a corresponding operating spanner (not shown);
- a second shank 330 extending on the opposite side to the first shank 320 relative to the central section 310 and in turn provided with a thread 330a suitable for engagement with a female thread 401 of a bush 400 (Fig. 8) integral with one of the two furniture parts to be fastened together.

In a preferred embodiment the pitch of the thread 330a of the second threaded shank 330 is greater than the pitch of the thread 320a of the first shank 320 of the pin 300.

The operating principle of the device is as follows:
- the head 100 is assembled by:
   . inserting the toothed wheel 210 in the associated seat 112 of the first half-head 110;
   . inserting the tube 220 in the associated axial seat 121 of the half-head 120;
   . joining frontally, in the longitudinal direction, the two half-heads 110 and 120 by means of the pins 115,125 and the corresponding centring holes 116,126 so that:
   . the annular teeth 221 of the tube 222 enter axially into contact with the undercut portion 111b of the axial seat 111 and radially into meshing engagement with the teeth 211 of the toothed wheel 210;
- the bush 400 is inserted into the part 2 of the furniture and the second threaded shank 330 of the pin 300 is screwed fully into the female thread 401 of the said bush, using a suitable spanner engaged with the inset hexagonal part 321 of the other shank 320 or with the central section 310,310a of the said pin, until the latter is locked to the bush 400 and therefore to the part 2;
- the head 100 is inserted into the corresponding 1a provided in the other part 1 to be fastened so that the through-hole 121a is aligned with the corresponding hole 1b of the said part 1;
- the two parts 1 and 2 are moved towards each other so that the first threaded shank 320 engages with the female thread 223 of the tube 222;
- a corresponding spanner is engaged with the seat 212 so as to operate the toothed wheel 210, causing rotation thereof and transmission of the movement to the teeth 221 of the tube 222 which starts to rotate about the longitudinal axis;
- rotation of the tube 222, which is axially fixed, causes, by means of the connection between female thread 223 and screw 320a of the shank 320, coaxial displacement of the pin 300 towards the head 100 inside which it may penetrate by means of the coaxial seat 111 of the half-head 110;
- said displacement of the pin draws with it the bush 400 and therefore the part 2 towards the part 1, resulting in mutual fastening thereof.

It is therefore obvious how the device according to the invention allows operation of the gearing actuating the pin 300 in a direction perpendicular to the head 100 of the device and therefore perpendicular to the direction of relative displacement of the two parts to be joined together; this ensures great ease and precision of operation.

In addition to this, owing to the possibility for the pin 300 to penetrate inside the head 100 over a considerable longitudinal distance, it is possible to take up a large amount of play which may arise in imprecision in machining of the seats housing the device in the parts to be joined.

Finally, it is pointed out how the device according to the invention allows a very high locking force to be applied to the pin.

According to the invention it is envisaged moreover that the device may be advantageously used also as an element for adjusting the level position of objects having several resting points.

In fact, as illustrated in Fig. 9, it is possible to engage the second threaded shank 330 of the pin 300 with the bush 400 inserted in / forming part of an upright 501 of an end foot 500 of the element 101 which may consist of a table leg or the bottom edge - resting on the ground - of an upright of a piece of furniture.

In this configuration, operating frontally the toothed wheel 210 results in adjustment of the height of the foot/upright 500 and therefore level positioning of the associated structure.

Into fig.10 it is shown a further example of exploitation of the device according to the present invention suitable for joining two pieces 1001 and 1002 placed at an angle of 180° or, in other words, aligned along a longitudinal axis X-X.

Accordingly the cylindrical head 100, joined to the first wall 1001 remain unchanged while the bush inserted into the second wall 1002 is made by a second cylindrical head 1400 into which a "T" shaped seat 1410 is obtained.

The pin 1300 connecting the two heads comprises:
- a cylindrical central section 1310 on the side surface of which smoothed zones 1310a able to form elements for insertion into the longitudinal part 1410b of said "T" shaped seat 1410;
- a first shank 320 extending longitudinally on one side of the said cylindrical section and provided with threading 320a able to engage with the female thread 223 of the tube 222;
- a head 1330 extending on the opposite side to the first shank 320 relative to the central section 1310 and able to form an element for insertion into the transversal part 1410a of said "T" shaped seat 1400.

If a spanner is engaged with the seat 212 so as to operate the toothed wheel 210, causing rotation thereof and transmission of the movement to the teeth 221 of the tube 222 which starts to rotate about the longitudinal axis;
- rotation of the tube 222, which is axially fixed, causes, by means of the connection between female thread 223 and screw 320a of the shank 320, coaxial displacement of the pin 1300 towards the head 100 inside which it may penetrate by means of the coaxial seat 111 of the half-head 110;
- said displacement of the pin draws with it the head 1330, whose rotation is not permitted by the smoothed zones 1310a, and therefore the second head 1400 and consequently the part 1002 towards the part 1001, resulting in mutual fastening thereof.

## Claims

1. Device for joining together, in a longitudinal direction (X-X), two parts (1,2;1001,1002) adjacent with respect to each other, comprising a head (100) integral with one (1,2;1001,1002) of the two parts to be joined, a pin (300;1300) integral with the other (2,1;1002,1001) of the said parts to be joined, **characterized in that** said head has, arranged inside it, a gearing (210,220) able to be actuated in a direction (Y-Y) perpendicular to the longitudinal joining direction and operate said pin (300,1300) so to determine joining together of the two parts (1,2;1001,1002) in the longitudinal direction (X-X).

2. Device according to Claim 1, **characterized in that** said head (100) is formed by a first half-head (110) and by a second half-head (120) which can be joined together by means of associated coupling elements (115,125) and corresponding centring seats (116,126).

3. Device according to Claim 2, **characterized in that** the first half-head (110) has inside it a first coaxial seat (111) which is open towards the flat front side (110a) of the half-head (110) and blind towards the opposite end coinciding with the curved side surface of the said half-head.

4. Device according to Claim 3, **characterized in that** the front edge (111a) of the seat (111) has an annular undercut portion (111b).

5. Device according to Claim 2, **characterized in that** the half-head (110) has, formed inside it, a second seat (112) arranged along a horizontal plane and intersecting the said longitudinal seat (111) so that the two recesses are open and communicate with each other along the axial extension of the said seats.

6. Device according to Claim 5, **characterized in that** the said second seat (112) opens outwards by means of a hole (113) with an axis perpendicular to the longitudinal direction (X-X), formed in the upper front surface of the half-head (110).

7. Device according to Claim 2, **characterized in that** said second half-head (120) has a first seat (121) passing through the curved side surface of the half-head (120) via a hole (121a) coaxial with the longitudinal direction (X-X).

8. Device according to Claim 2, **characterized in that** said half-head (120) has a second seat (122) arranged along a horizontal plane and tangential to the said longitudinal seat (121).

9. Device according to Claim 8, **characterized in that** said second seat (122) extends towards the inside of the half-head (120) only over a short axial distance.

10. Device according to Claim 1, **characterized in that** said gearing (200) comprises a toothed wheel (210) which has teeth (211) extending from one side of the wheel parallel to the axis of rotation (Y-Y) thereof and along the entire circumference of the wheel.

11. Device according to Claim 10, **characterized in that** said toothed wheel has an actuating seat (212) formed on the side of the wheel opposite to that of the teeth (211).

12. Device according to Claim 11, **characterized in that** said actuating seat (212) has a profile shaped according to one or more cross-like/hexagonal profiles or the like of corresponding operating spanners.

13. Device according to Claim 10, **characterized in that** said gearing (200) comprises a toothed rim (221) annularly formed on the external surface of a coaxial tube (222) which is also provided with an internal female thread (223).

14. Device according to Claim 13, **characterized in that** said toothed rim (221) is axially arranged at a certain distance from the edge of the tube (222) so as to define an axial section (222a) thereof able to be coaxially inserted inside said first longitudinal seat (111) of the half-head (110).

15. Device according to Claim 1, **characterized in that** said pin (300) comprises a cylindrical central section (310), a first shank (320) extending longitudinally from one side of the said cylindrical section and provided with a thread (320a) able to engage with the female thread (223) of the tube (222) and a second shank (330) extending on the opposite side to the first shank (320) relative to the central section (310) and in turn provided with a thread (330a).

16. Device according to Claim 15, **characterized in that** the free end part of said first shank (320) is formed as an inset hexagonal part (321) suitable for engagement with a corresponding operating spanner.

17. Device according to Claim 15, **characterized in that** smoothed zones (310a) able to form elements for engagement with an operating spanner are provided on the side surface of the said central part (310).

18. Device according to Claim 15, **characterized in that** said thread (330a) of the second shank (330) is suitable for engagement with a female thread (401) of a bush (400) integral with one of the two parts (1,2) to be fastened together.

19. Device according to Claim 15, **characterized in that** the pitch of the thread (330a) of the second threaded shank (330) is greater than the pitch of the thread (320a) of the first shank (320) of the pin (300) .

20. Device according to Claim 1, **characterized in that** said pin (1300) comprises a cylindrical central section (1310) with smoothed zones (1310a), a first shank (320) extending longitudinally from one side of the said cylindrical section and provided with a thread (320a) able to engage with the female thread (223) of the tube (222) and a head (1330) extending on the opposite side to the first shank (320) relative to the central section (1310).

21. Device according to Claim 20, **characterized in that** comprises a second head (1400) suitable for the coupling with the other (2,1;1002,1001) of the said parts to be joined, into said second head (1400) being realized a "T" shaped seat (1410).

22. Device according to Claim 21, **characterized in that** said "T" shaped seat (1410) presents a transversal part (1410a) for the insertion of the head (1330) of the pin (1300) and a longitudinal part (1410b) for the insertion of the smoothed zones (1310a) of the cylindrical central section (1310) of said pin (1300).

23. Use of the device according to Claim 1 for adjusting the level position of a furniture element (101) or the like.
